# DEMANDE DE BREVET EUROPEEN

(11) **EP 3 054 422 A1**
(43) Date de publication de la demande: **10.08.2016**
(21) Numéro de dépôt: 16154255.0
(22) Date de dépôt: 04.02.2016
(51) Int. Cl.: G06T 11/00

(54) **PROCÉDÉ DE DETERMINATION D'UN AXE DE ROTATION D'UN OBJET EN TOMOGRAPHIE ET PROCÉDÉ DE CARACTERISATION PAR TOMOGRAPHIE**

(30) Priorité: 05.02.2015 FR 1550905
(71) Demandeur: Commissariat à l'Énergie Atomique et aux Énergies Alternatives, 75015 Paris (FR)
(72) Inventeur: PRINTEMPS, Tony, 38000 GRENOBLE (FR); BLEUET, Pierre, 38180 SEYSSINS (FR)
(74) Mandataire: Brevalex

(57) **Abrégé**

Procédé de détermination d'un axe de rotation d'un objet lors d'une acquisition de projections obtenue par un système de caractérisation par tomographie, comportant les étapes, à partir desdites projections:
- Sélection de zones sur les projections le long d'un axe de rotation supposé,
- Reconstruction d'une structure de l'objet à partir des données des zones sélectionnées,
- Réalisation de reprojections de la reconstruction,
- Détermination d'un décalage total pour chaque zone sélectionnée,
- Détermination de l'axe de rotation réel à partir des décalages totaux déterminés pour toutes les zones.

## Description

### DOMAINE TECHNIQUE ET ÉTAT DE LA TECHNIQUE ANTÉRIEURE

La présente invention se rapporte à un procédé de détermination d'un axe de rotation d'un objet en tomographie et à un procédé de caractérisation d'un objet par tomographie mettant en oeuvre un tel procédé.

La tomographie, par exemple la tomographie électronique est une technique de caractérisation couramment utilisée pour obtenir une image de la structure en trois dimensions d'un objet, celui-ci pouvant présenter des dimensions d'une centaine de nanomètres, avec une résolution d'environ un nanomètre.

Cette technique comporte :
- l'étape d'acquisition d'une série d'images 2D, appelées projections, obtenue à l'aide d'un microscope électronique en transmission à partir d'un objet qui est mis en rotation autour d'un axe, idéalement sur 180°. Les projections sont prises par exemple avec un pas compris entre 1° et 5°,
- l'étape d'alignement des projections,
- l'étape de reconstruction numérique de l'objet en trois dimensions.

La tomographie électronique présente un intérêt grandissant, en particulier dans un contexte de miniaturisation et de complexification toujours plus poussées des composants électroniques. Néanmoins, cette technique est limitée par la quantité de travail qu'elle impose. En effet, elle demande une préparation très soignée de l'échantillon et des étapes d'acquisition des images au microscope, d"alignement des données et de reconstruction 3D au moyen d'un algorithme.

Pour obtenir une reconstruction satisfaisante, les algorithmes de reconstruction nécessitent une connaissance parfaite du mouvement de rotation de l'objet pendant l'acquisition des projections. Classiquement, les algorithmes reconstruisent l'objet en 3D à partir des projections d'un objet ayant un mouvement de rotation pure autour d'un axe vertical, qui est celui du porte-échantillon du système de caractérisation par tomographie, dont la projection se situe au milieu des images 2D. Il s'agit d'un cas idéal qui ne survient presque jamais. En effet, l'axe de rotation peut être incliné par rapport à la direction verticale dans un plan parallèle au faisceau d'électrons et/ou être incliné par rapport à la direction verticale dans un plan perpendiculaire au faisceau d'électrons.

La rotation d'un objet à cette échelle va entraîner un déplacement de l'objet sur plusieurs nanomètres, voire sur des dizaines de nanomètres ou même centaines de nanomètres d'une image à l'autre. En outre, l'axe de rotation n'est pas complètement connu et une imprécision, même de l'ordre de 1° degré, peut avoir des conséquences importantes sur la qualité de la reconstruction 3D.

Il peut notamment apparaître des artéfacts en arc sur les vues en coupe reconstruites.

Il existe des techniques visant à réduire ces artéfacts en arc.

Une des techniques utilise une technique d'alignement des projections en corrigeant le décalage entre une projection et la suivante par des calculs de corrélations-croisées. Les translations suivant les deux directions de l'espace sont ainsi corrigées entre les images qui se suivent. Une fois que les translations sont corrigées par cette méthode, l'axe de rotation est en général déterminé en minimisant visuellement les artéfacts en arc sur quelques coupes reconstruites au centre et sur les extrémités de l'objet, Ces méthodes classiques d'alignement sont par exemple, celles utilisées dans le logiciel Inspect3D proposé par le constructeur de microscope électronique FEI.

Cette technique de détermination de l'axe de rotation demande donc à l'opérateur d'évaluer à l'oeil la qualité de la reconstruction. Cela peut être relativement simple sur des reconstructions avec beaucoup de détails comme le silicium poreux, mais cela peut être beaucoup plus difficile avec des objets présentant peu de détails, en particulier aux extrémités. En outre, une précision au plus de l'ordre du degré peut être obtenue. De plus, la qualité de la détermination de l'axe de rotation est dépendante de l'aptitude de l'opérateur et des coupes utilisées pour évaluer les artéfacts.

Une autre technique est décrite dans D. Wolf, "Accurate tilt series alignment for single axis tomography by sinogram analysis," in Proceedings of the 15th European microscopy Congress, 2012*.* Cette technique permet d'aligner à la fois l'axe de rotation et les translations suivant les deux directions de l'espace. La technique consiste à choisir trois sinogrammes, un en haut, un au milieu et un en bas des projections. Le barycentre des sinogrammes est calculé et des interpolations sinusoïdales de ces trois barycentres sont réalisées. Dans le cas où l'axe de rotation n'est pas totalement vertical et centré, les barycentres des sinogrammes sont décalés de leur sinusoïde par une constante pour les sinogrammes du haut, du centre et du bas.

L'alignement des translations et de l'axe de rotation se fait en tournant et en translatant les projections dans un procédé itératif en essayant de minimiser les constantes.

Cette technique présente l'avantage de ne pas dépendre des aptitudes de l'opérateur. Elle est cependant très sensible à la diffraction qui peut survenir sur un objet possédant des parties cristallines. La diffraction a alors pour effet d'augmenter l'intensité d'une partie de l'objet sur certaines projections correspondant à un angle de diffraction du cristal par rapport au faisceau d'électrons. Cette augmentation de l'intensité peur provoquer un décalage dans la détermination du barycentre et alors fausser l'alignement. En outre cette technique nécessite d'interpoler par une sinusoïde les données, ce qui n'est pas nécessairement robuste avec des données bruitées.

### EXPOSÉ DE L'INVENTION

C'est par conséquent un but de la présente invention d'offrir un procédé de détermination de l'axe de rotation de l'objet à imager par tomographie et un procédé d'imagerie par tomographie offrant des images reconstruites de qualité améliorée.

Le but précédemment énoncé est atteint par un procédé de détermination de l'axe de rotation de l'échantillon comportant les étapes:
- de sélection dans chaque projection, le long de l'axe de rotation supposé d'un sous-groupe de données situé à une position donnée le long de l'axe de rotation supposée, ce qui correspond à une hauteur de l'échantillon, le sous-groupe de données comportant une ligne ou plusieurs lignes,
- de réalisation d'une reconstruction à partir des données,
- de reprojection de la reconstruction,
- de détermination du décalage pour le sous groupe sélectionné entre les projections et les reprojections,
- ces étapes reconstruction / reprojection sont répétées pour obtenir un décalage suivant un critère donné. Le décalage obtenu est un décalage en translation à la hauteur du sous-groupe sélectionné.

Plusieurs sous-groupes à des hauteurs différentes sont sélectionnés et le décalage en translation est déterminé pour chaque sous-groupe.

Connaissant alors les décalages en translation à plusieurs hauteurs de l'axe de rotation supposé, l'axe de rotation réel peut être déterminé en translatant et/ou en pivotant l'axe de rotation supposé de chaque projection.

Pour effectuer la reconstruction de la structure de l'objet, on peut par exemple soit corriger l'axe de rotation sur chaque projection et effectuer la reconstruction à partir des projections corrigées, soit prendre en compte l'axe de rotation réel dans les algorithmes de reconstruction.

Les étapes ci-dessus permettent de corriger une inclinaison et/ou un décalage de l'axe de rotation dans un plan perpendiculaire à la direction du faisceau d'électrons. En revanche elles ne permettent pas de corriger une inclinaison et/ou un décalage dans un plan parallèle à la direction du faisceau d'électrons. On prévoit alors préalablement aux étapes ci-dessus de corriger la translation et/ou le décalage dans un plan parallèle à la direction du faisceau d'électrons par des techniques connues, telles que les techniques de corrélations-croisées entre projections successives ou les techniques de "Ligne Commune", cette liste n'étant pas exhaustive.

En d'autres termes, en réalisant des étapes successives de reconstruction / reprojection pour des données à différentes hauteurs des projections, on fait apparaître le décalage entre l'axe de rotation utilisé pour la première reconstruction et l'axe de rotation réel ou se rapprochant de l'axe de rotation réel.

La technique de correction selon l'invention peut être très robuste, en utilisant par exemple un algorithme de reconstruction robuste tel que la méthode de reconstruction itérative simultanée (SIRT) de 100 itérations, par exemple avec contrainte de positivité, permettant d'avoir une détermination précise des translations communes optimales.

De manière avantageuse, on obtient une technique encore plus robuste en utilisant un certain nombre de sous-groupes à des emplacements distincts des projections, très avantageusement 7, de façon à pouvoir réaliser une interpolation linéaire fiable et limiter les risques d'imprécision.

Cette technique est en outre très rapide, par exemple elle dure de quelques dizaines de secondes à quelques minutes lorsqu'elle est mis en oeuvre par un ordinateur équipé d'une carte graphique.

La détermination du décalage entre les projections et reprojections est par exemple réalisée par corrélations-croisées. En variante, on pourrait utiliser les contours ou un élément de la reconstruction intermédiaire visible sur les projections.

La présente invention a alors pour objet un procédé de détermination d'un axe de rotation d'un objet lors d'une acquisition de projections obtenue par un système de caractérisation par tomographie, comportant les étapes, à partir desdites projections:
a) choix d'un axe de rotation supposé sur les projections,
b) sélection d'une première zone sur les projections le long de l'axe de rotation supposé,
c) Reconstruction d'une structure de l'objet à partir des données de la zone sélectionnée à partir de tout ou parties des projections en considérant l'axe de rotation supposé,
d) Réalisation de reprojections de la reconstruction,
e) Détermination de décalages entre les projections et les reprojections,
f) détermination d'un décalage commun à partir des décalages déterminés à l'étape e),
g) application du décalage commun à la zone sélectionnée sur tout ou partie des projections,
h) répétition des étapes c) à g), l'étape de reconstruction c) étant faite à partir des projections obtenues à l'étape d), tant qu'un critère d'arrêt n'est pas atteint,
i) détermination d'un décalage total à partir du ou des décalage(s) commun(s) déterminés à l'étape f) ou aux étapes f),
j) répétition des étapes a) à i) pour n autres zones distinctes de la première zone, n étant supérieur ou égal à 1,
k) détermination de l'axe de rotation à partir des décalages totaux déterminés pour les n + 1 zones.

Les étapes c) et d) se font avantageusement avec le même projecteur.

De préférence, n est supérieur ou égal à 2 et est avantageusement égal à 6.

De manière avantageuse, l'étape c) est réalisée par une méthode de reconstruction itérative simultanée (SIRT) comprenant avantageusement 100 itérations avec une contrainte de positivité.

L'étape e) peut se faire également avantageusement par corrélations-croisées.

L'étape k) peut se faire également avantageusement par extrapolation linéaire à partir des décalages totaux.

Selon une caractéristique additionnelle, la détermination d'un décalage commun peut comporter l'étape de détermination d'un décalage moyen à partir des décalages déterminés à l'étape e), le décalage commun étant égal à un coefficient λ multiplié par le décalage moyen, λ étant strictement supérieur à 0.

La valeur du coefficient λ peut de préférence diminuer aux cours des itérations, le coefficient λ étant avantageusement initialement égal à 10.

Par exemple, le critère d'arrêt peut être soit:
- uniquement un nombre d'itérations des étapes c) à g),
- uniquement une valeur du dernier décalage commun inférieure à une valeur donnée,
- celui qui est atteint le premier parmi un nombre d'itérations des étapes c) à g) ou une valeur du dernier décalage commun inférieure à une valeur donnée,

De préférence, le procédé comporte l'étape d'alignement des projections, avant l'étape de reconstruction, par exemple par corrélations-croisées.

Les zones sélectionnées peuvent comporter une ou plusieurs lignes de pixels.

La présente invention a également pour objet un procédé de caractérisation par tomographie comportant les étapes :
A) Acquisition de plusieurs projections,
B) détermination de l'axe de rotation réel de l'objet en mettant en oeuvre le procédé selon l'invention,
C) Prise en compte de l'axe de rotation réel pour effectuer la reconstruction de la structure de l'objet au moyen d'un algorithme de reconstruction.

Selon un exemple, l'étape C) comporte préalablement à la reconstruction, la correction des projections avec l'axe de rotation réel.

Selon un autre exemple, l'étape C) comporte préalablement à la reconstruction, l'intégration des corrections dans l'algorithme de reconstruction.

L'étape A) se fait par exemple par tomographie électronique ou par tomographie à rayons X.

### BRÈVE DESCRIPTION DES DESSINS

La présente invention sera mieux comprise sur la base de la description qui va suivre et des dessins en annexe sur lesquels:
- la figure 1 est représentation de plusieurs projections sur lesquelles sont schématisées trois groupes de données de projections situés à différentes hauteurs le long de l'axe de rotation supposé, chaque groupe comportant une ligne, un groupe étant situé à un quart de la hauteur, un groupe étant situé à la moitié de la hauteur et le dernier groupe étant situé aux trois quarts de la hauteur,
- la figure 2 est représentation de plusieurs projections sur lesquelles sont schématisées quatre groupes de données de projections situés à différentes hauteurs le long de l'axe de rotation supposé, chaque groupe comportant plusieurs lignes, les groupes étant situés à des hauteurs quelconques,

- la figure 3 et un organigramme représentant la détermination de la translation commune optimale en pixels pour un sous-groupe de données de projections à une hauteur donnée des projections,
- la figure 4 est une représentation graphique des décalages en pixels déterminés pour chaque angle de projection entre les projections et les reprojections,
- la figure 5 est une représentation graphique du décalage commun cumulé en pixel en fonction du nombre d'itérations,
- les figures 6A à 6E sont des reconstructions intermédiaires de coupe de l'échantillon de silicium poreux obtenues au cours du procédé de la figure 3,
- la figure 7 est une projection d'un échantillon de silicium poreux sur laquelle sont représentés l'axe de rotation supposé et l'axe de rotation corrigé,
- la figure 8 est une représentation graphique des valeurs expérimentales calculées de sept translations communes optimales en fonction de la hauteur en pixels le long de l'axe de rotation supposé et de l'interpolation linéaire correspondante,
- la figure 9 est une représentation schématique d'un dispositif d'imagerie par tomographie apte à mettre en oeuvre le procédé d'imagerie selon l'invention,
- la figure 10A est une représentation schématique d'un axe de rotation incliné que l'on peut déterminer par le procédé selon l'invention,
- la figure 10B est une représentation schématique d'un axe de rotation incliné que l'on ne peut pas déterminer par le procédé selon l'invention.

### EXPOSÉ DÉTAILLÉ DE MODES DE RÉALISATION PARTICULIERS

Dans la description qui va suivre, seront désignées par:
- projections : les images 2D obtenues par un microscope électronique en transmission,
- reconstruction intermédiaire : l'image 3D reconstruite par un algorithme à partir des projections ou reprojections,
- reprojections : les images 2D obtenues à partir de l'image 3D reconstruite,
- groupe de données de projection : des données tirées d'une projection ou reprojection à une hauteur donnée de l'axe de rotation supposé, ce groupe pouvant comporter une ou plusieurs lignes,
- axe de rotation supposé : l'axe de rotation vertical au centre des projections, il est désigné A,
- par axe de rotation réel : l'axe de rotation déterminé par le procédé selon l'invention, il est désigné A'.

Dans l'exemple qui va être décrit, c'est l'échantillon qui est pivoté par rapport à la source et au détecteur. Dans un autre exemple, la source et le détecteur pourraient être mobiles et l'échantillon fixe.

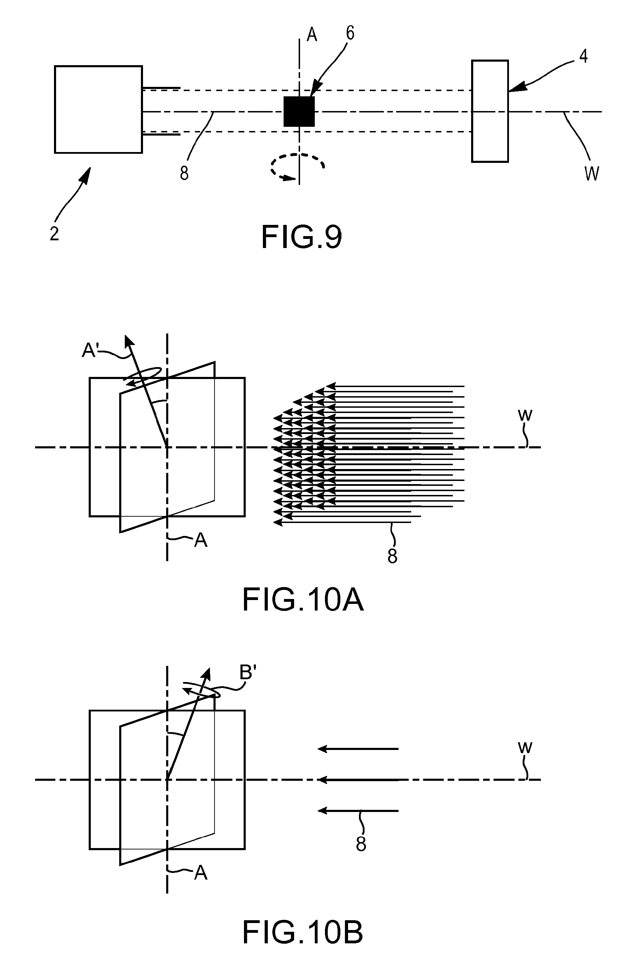

Sur la figure 9, on peut voir représenté schématiquement un système de tomographie comportant une source de rayons X ou d'électrons 2 d'axe W, un détecteur 4 et un porte-échantillon 6 disposé entre la source 2 et le détecteur de sorte que l'échantillon soit situé sur le trajet du faisceau 8 émis par la source 2. Le faisceau 8 est symbolisé par un trait en pointillé.

Dans le cas d'une source d'électrons, les détecteurs sont du type à transmission tels que ceux utilisés en microscopie électronique à transmission (TEM : Transmission electron microscopy) ou STEM (Scanning Transmission electron microscopy). Dans le cas d'une source de rayons X, les détecteurs utilisés sont ceux conventionnellement utilisés en radiographie X et tomographie X.

Le porte-échantillon 6 est tel qu'il est apte à pivoter autour d'un axe désigné A. Dans l'exemple représenté, l'axe A est vertical.

Les algorithmes de reconstruction ont besoin de connaître l'axe de rotation pour reconstruire la structure 3D à partir des projections. Les algorithmes considèrent que sur les projections, l'axe de rotation se situe au milieu de la projection et est vertical.

Sur la figure 10A, est représenté schématiquement le faisceau d'électrons 8 et un axe rotation A' dont on peut détecter l'orientation grâce au procédé selon l'invention. L'axe de rotation A est incliné par rapport à la verticale dans un plan perpendiculaire à la direction du faisceau 8. Sur la figure 10B, est représenté schématiquement le faisceau d'électrons 8 et un axe rotation B' dont on ne peut pas détecter l'orientation grâce au procédé selon l'invention. L'axe de rotation B' est incliné par rapport à la verticale dans un plan parallèle à la direction du faisceau 8. Néanmoins une composante dans un plan parallèle à l'axe du faisceau a beaucoup moins d'influence sur la reconstruction qu'une composante non nulle dans la direction perpendiculaire au faisceau.

Le procédé de détermination de l'axe de rotation de l'échantillon à imager par tomographie comporte entre autres l'étape de préparation de l'échantillon à imager et l'étape d'acquisition de projections de l'échantillon.

L'échantillon a de préférence la forme d'une pointe.

L'échantillon est par exemple préparé en pointe à l'aide d'une sonde ionique focalisée ou FIB (Focus Ion Beam en terminologie anglo-saxonne). La préparation d'échantillon en forme de pointe est connue de l'homme de métier et ne sera pas décrite en détail.

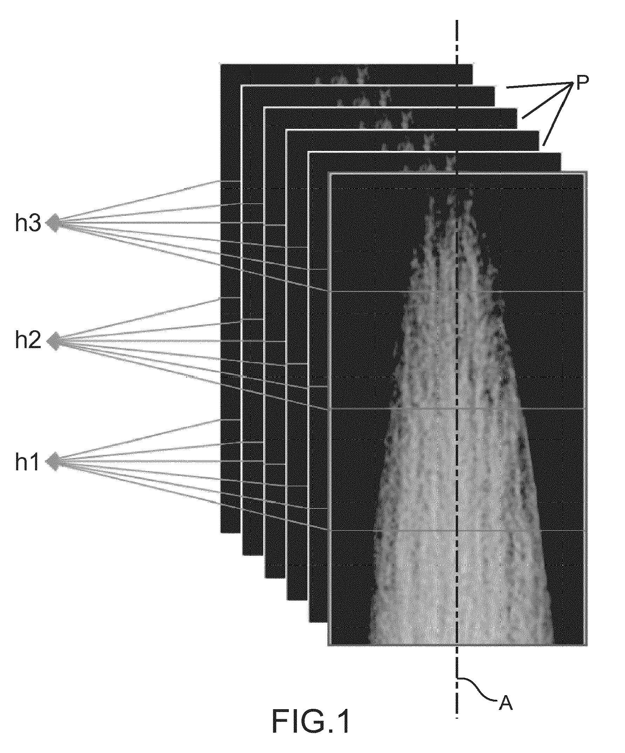

Sur la figure 1, on peut voir une série de six projections P obtenues pour un échantillon E de silicium poreux. De préférence, l'échantillon est tourné de 180° et des projections sont prises avec un pas compris entre 0,5° et 1° par exemple.

De préférence, le procédé utilise au moins 180 projections.

Sur les projections de la figure 1, l'axe A est représenté, il s'agit de l'axe de rotation supposé considéré initialement par les algorithmes de reconstruction de l'état de la technique et qui est pris en compte pour la première reconstruction qui va être décrite.

Le procédé de détermination de l'axe de rotation réel ou se rapprochant de l'axe de rotation réel prévoit de déterminer le décalage entre l'axe de rotation supposé et l'axe réel au niveau de plusieurs positions le long de l'axe A.

Sur la figure 1, trois positions ont été choisies, ce qui correspond à trois hauteurs h1, h2, h3 sur les projections. Le procédé utilise les données des projections à chacune des hauteurs h1, h2, h3. Sur la figure 1, ces données correspondent à une ligne à chaque hauteur. Les données sont en fait des pixels.

Les hauteurs peuvent être choisies automatiquement, par exemple en cherchant des zones de l'image présentant peu de variation selon l'axe vertical.

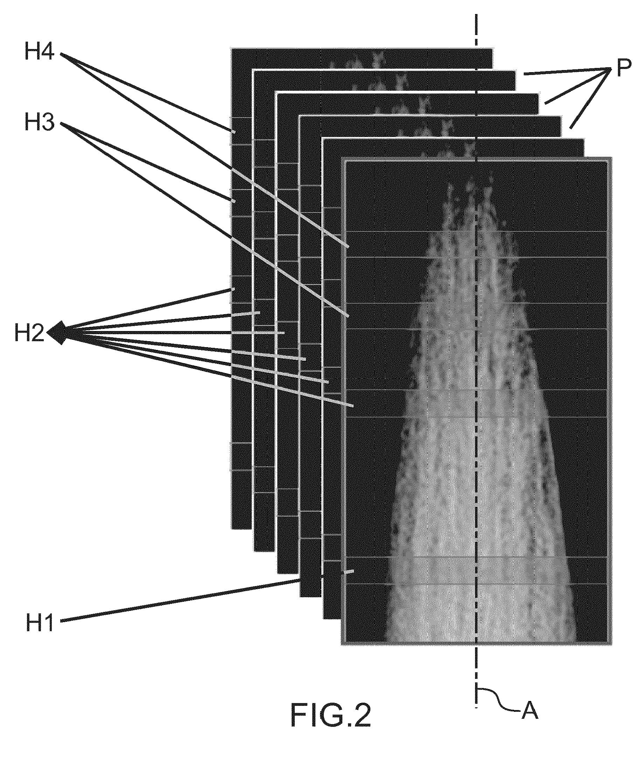

Sur la figure 2, on peut voir les mêmes projections P mais sur lesquelles on sélectionne des données à quatre hauteurs différentes H1, H2, H3, H4. En outre, les données sélectionnées correspondent à plusieurs lignes à chaque hauteur.

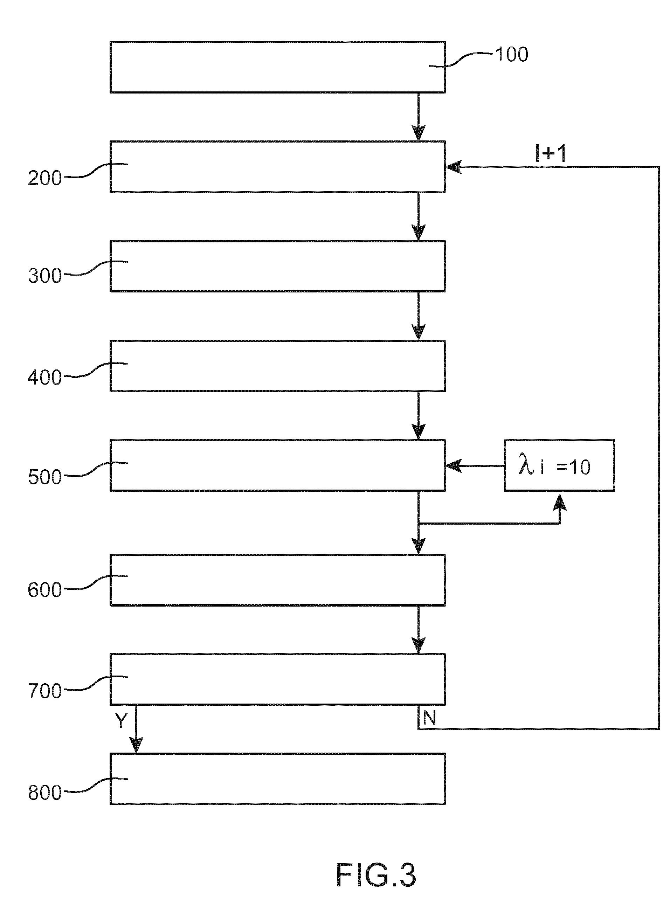

Sur la figure 3 est représenté un organigramme des étapes du procédé de détermination du décalage total ou translation commune optimale à une hauteur sélectionnée.

Les étapes de l'organigramme de la figure 3 sont répétées pour chaque groupe de données sélectionné. Ensuite en connaissant la translation commune optimale à chaque hauteur, il est possible de déterminer l'axe de rotation réel par interpolation linéaire par exemple.

Le procédé va maintenant être décrit en détail.

De préférence, avant de déterminer les translations communes optimales à différentes hauteurs, on corrige les translations entre les images. Pour cela on utilise une technique connue, telle que la technique de corrélations-croisées entre projections successives, par exemple à l'aide du logiciel Inspect3D de FEI ou les techniques de "Ligne Commune", cette dernière technique est par exemple décrite dans le document Brandt, S. S., & Frank, J. (2006). Markerless Alignment in Electron Tomography. In Electron Tomography (Second Edi., pp. 187-215*)*.

Ensuite on sélectionne une hauteur h1 (figure 1) ou H1 (figure 2) sur tout ou partie des projections alignées.

A l'étape 100, on sélectionne ensuite un groupe de données à la hauteur choisie. Sur la figure 1, on sélectionne une ligne de données et sur la figure 2 on sélectionne plusieurs lignes de données.

Lors de l'étape suivante 200, on réalise une reconstruction intermédiaire de la structure 3D à partir du groupe de données à la hauteur h1 ou H1. On réalise par exemple une reconstruction de type méthode de reconstruction itérative simultanée ou SIRT pour "Simultaneous Iterative Reconstruction Technique" en terminologie anglo-saxonne de 100 itérations de préférence avec contrainte de positivité, i.e. la reconstruction ne peut pas prendre de valeurs négatives. Cette reconstruction offre un très bon compromis temps/qualité de reconstruction.

En variante, d'autres types de reconstruction peuvent être mis en oeuvre. Par exemple, on pourrait utiliser:
- une rétroprojection filtrée, qui présente l'avantage d'être très rapide,
- une reconstruction algébrique simultanée ou SART ("Simultaneously Algebraic Reconstruction Technique" en terminologie anglo-saxonne) qui présente l'avantage d'être plus rapide que la méthode SIRT, néanmoins elle est moins robuste en tomographie électronique,
- une reconstruction utilisant un algorithme de type "acquisition comprimée" ou "compressed sensing" en terminologie anglo-saxonne ou " comme la Minimisation de la variation totale ou TVM ("Total Variation Minimization" en terminologie anglo-saxonne, qui offre une très bonne qualité de reconstruction, mais qui est très longue et requiert un grand nombre de paramètres,
- une reconstruction algébrique directe ou DART ("Discrete Algebraic Reconstruction Technique" en terminologie anglo-saxonne), qui offre également une très bonne qualité de reconstruction mais qui ne peut s'appliquer qu'aux objets dont on connait la composition et les valeurs de niveaux de gris et elle est relativement longue.

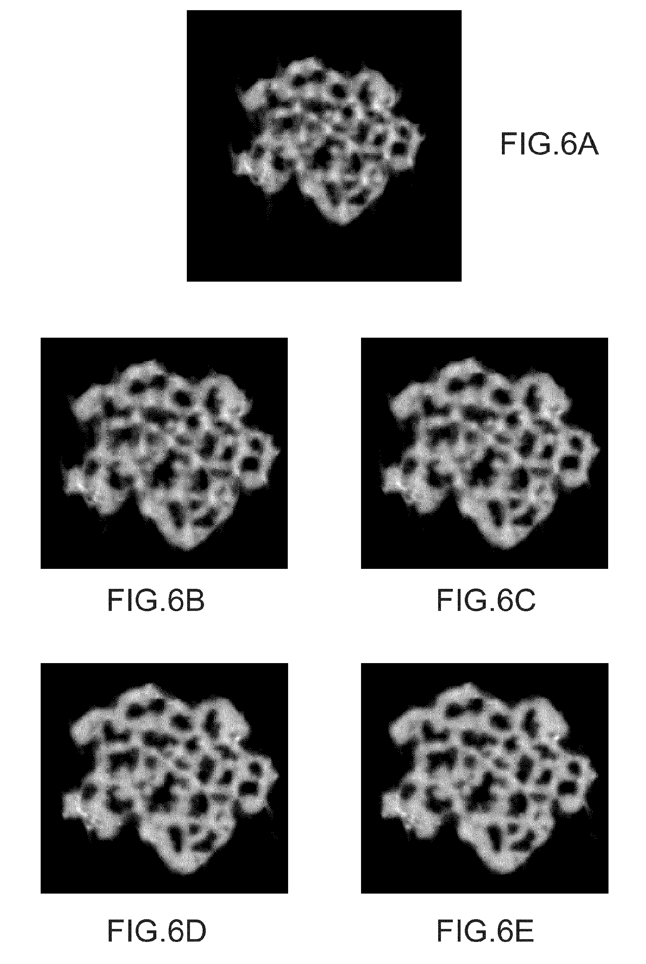

Par exemple, en faisant une reconstruction type SIRT de 100 itérations avec contrainte de positivité à partir d'un groupes de 5 lignes de 520 pixels sur 180 projections, avec le logiciel Matlab^{®}, on obtient la vue en coupe à une hauteur sélectionné de la figure 6A. La reconstruction est réalisée en considérant l'axe de rotation supposée A-A'.

Par exemple, le projecteur utilisé pour réaliser la reconstruction est défini en considérant que les projections ont été obtenues avec un faisceau d'électrons 3D et parallèle et suivant des angles α allant de 0 à 179 degrés avec un pas de 1 degré.

La reconstruction est faite dans un pavé de 520 pixels par 520 pixels par 5 pixels de haut; une ligne du groupe de données comporte 520 pixels et le groupe comporte 5 lignes.

Lors d'une étape suivante 300, on réalise des reprojections à partir de la reconstruction intermédiaire. Le projecteur utilisé pour les reprojections est de préférence identique à celui utilisé pour la reconstruction à l'étape 200, i.e. les reprojections sont faites avec les mêmes angles que ceux des projections acquises au microscope, ces reprojections ont la même taille et le même nombre de pixels que les projections initiales.

Lors d'une étape suivante 400, on effectue une étape d'alignement pour déterminer le décalage en pixels entre chaque projection obtenue par le microscope et la reprojection calculée à l'étape 300. Par exemple le décalage est déterminé par corrélations-croisées, par exemple avec la fonction dftregistration du logiciel Matlab®. Le décalage est par exemple donné en une valeur multiple de 1/10^{ème} de pixels.

Avantageusement les techniques de corrélation-croisée peuvent être améliorées en appliquant une technique de traitement de l'image sur les projections et/ou la reconstruction intermédiaire et/ou les reprojections, par exemple on peut appliquer un filtre de Sobel qui a pour effet de faire ressortir les contours d'une image.

En variante, on peut envisager d'utiliser un élément de la reconstruction intermédiaire visible sur les projections pour l'alignement

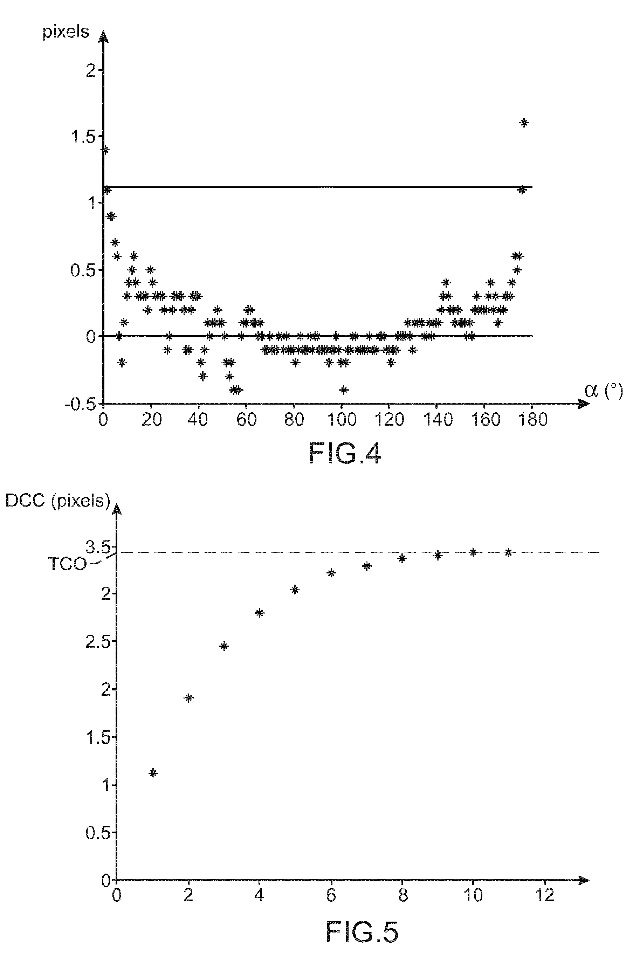

Sur la figure 4, on peut voir les décalages en pixels mesurés entre chaque projection et sa reprojection associée en fonction des angles de projection.

Le décalage moyen DM est de 0,12 pixel.

A l'étape 500, on détermine ensuite un décalage commun DC. Pour cela on calcule le décalage moyen DM entre toutes les projections. DC est égal à λ×DM. Sur la figure 4, λ initial est choisi égal à 10 et est désigné λᵢ sur l'organigramme, la valeur de λ pourrait être autre. Le choix d'un λ > 1 permet d'accélérer la convergence. Mais il sera compris que λ pourrait être égal à 1, voire < 1.

Selon une variante avantageuse, on calcule la moyenne de la première et la de la dernière translation qui forme directement le décalage commun.

Cette variante a pour avantage d'offrir un gain de temps de calcul important. De plus, la projection à -90° et la projection à +90° devraient être identiques à une symétrie près en théorie. Si l'axe de rotation n'est pas bien défini, les projections à - 90° et +90° ne seront pas identiques à une symétrie près. La reconstruction va donc essayer de donner un objet qui lorsqu'il sera reprojeté donne à peu près les deux projections mesurées tout en étant tentant d'obtenir des reprojections à -90° et +90° symétriques. Les projections sont alors décalées automatiquement d'environ l'écart entre l'axe de rotation réel et le milieu des projections.

Nous verrons que dans la suite du procédé que ce facteur est modifié.

Lors d'une étape suivante 600, on applique à toutes les projections acquises par le microscope le décalage commun DC.

L'utilisation du décalage moyen et sa multiplication par un facteur λ permet une convergence rapide et assure une certaine robustesse.

En variante, au lieu de calculer le décalage moyen pour obtenir le décalage commun, on peut calculer le décalage médian, ceci peut être intéressant dans le cas où quelques projections sont très mal alignées. En effet le décalage médian ne prendra pas en compte ces projections.

Un critère d'arrêt de détermination du décalage a été préalablement fixé, par exemple il s'agit d'un nombre donné d'itérations I, par exemple I = 20, ou une valeur du dernier décalage commun appliqué inférieure à une valeur donnée, par exemple inférieure à 10⁻³ pixels, la détermination s'arrêtant lorsque l'un ou l'autre des critères. Ce critère d'arrêt est vérifié à l'étape 700.

Si le critère d'arrêt Y est atteint, on passe à l'étape 800, lors de laquelle on détermine le décalage total qui est égal à la somme de tous les décalages pour toutes les itérations. Ce décalage total est également désigné "translation commune optimale" ou TCO.

En variante, le critère d'arrêt peut être uniquement le nombre maximal d'itérations ou uniquement la valeur limite inférieure de décalage commun déterminé atteinte, ce dernier critère est simple à mettre en oeuvre et est efficace. En variante encore, le critère d'arrêt pourrait être la stagnation de l'amélioration de la reconstruction d'une itération à la suivante. Cette stagnation peut être déterminée en estimant la distance entre projection et reprojection correspondante, ou en déterminant la qualité de la reconstruction, etc.

Sur la figure 5, on peut voir la représentation graphique du décalage commun cumulé DCC en pixels en fonction du nombre d'itération. La TCO est obtenue après 11 itérations, le décalage ajouté entre la 10^{ème} itération et la 11éme itération étant inférieure à 10⁻³ pixel. Le décalage total est égal à 3,44 pixels.

Si le critère d'arrêt n'est pas atteint (N), alors on retourne à l'étape 200. Il s'agit de l'itération I + 1, I ≥ 0. On réalise une nouvelle reconstruction à partir des projections décalées à l'étape 500. Ensuite on reprojette cette reconstruction à l'étape 300.

On détermine ensuite le décalage entre chaque projection décalée et sa reprojection associée. Le décalage moyen est ensuite appliqué et un décalage commun est calculé. Si le décalage déterminé à cette itération n'est pas du même signe que le décalage déterminé à l'itération précédente, le coefficient λ est réduit, par exemple il est divisé par 2, sinon il peut rester inchangé. Ceci permet d'augmenter la stabilité du procédé.

Les étapes de décalage des projections, reconstruction, reprojections et détermination du décalage peuvent être effectuées plusieurs fois. Sur les figures 6B, 6C, 6D et 6E, on peut voir les reconstructions intermédiaires aux itérations 2, 3, 8 et 11 respectivement. On remarque progressivement la diminution de l'artéfact de désalignement puisque l'on décale progressivement la projection et qu'on se rapproche de l'axe de rotation réel.

A la fin de ce procédé, nous avons déterminé le décalage total à la hauteur h1 ou H1 entre l'axe de rotation A et l'axe de rotation réel A'.

Les étapes 100 à 800 sont répétées pour les autres groupes de données sélectionnées afin de déterminer le décalage total à chaque hauteur.

Le procédé de détermination de l'axe de rotation réel est obtenu de la manière suivante à partir des décalages à chaque hauteur:

Si l'axe de rotation réel est complètement vertical, les translations communes optimales déterminées aux différentes hauteurs sont identiques. Si l'axe de rotation réel et l'axe de rotation supposé sont confondus, les TCO déterminées aux différentes hauteurs sont nulles.

Dans le cas où l'axe de rotation réel est incliné par rapport à l'axe de rotation supposé, les TCO dépendent de la hauteur selon une expression affine de la forme : *Tco*(*z*)=*tan*(*α*)×*z*+*x*0 ; ou α est l'angle entre l'axe de rotation A' et la verticale et *x*0 est la valeur de la translation commune optimale au milieu des projections 2D complètes. Une approximation linéaire à partir des valeurs des TCO donne les valeurs α et *x*0.

On réalise ensuite une interpolation linéaire pour déterminer l'axe de rotation.

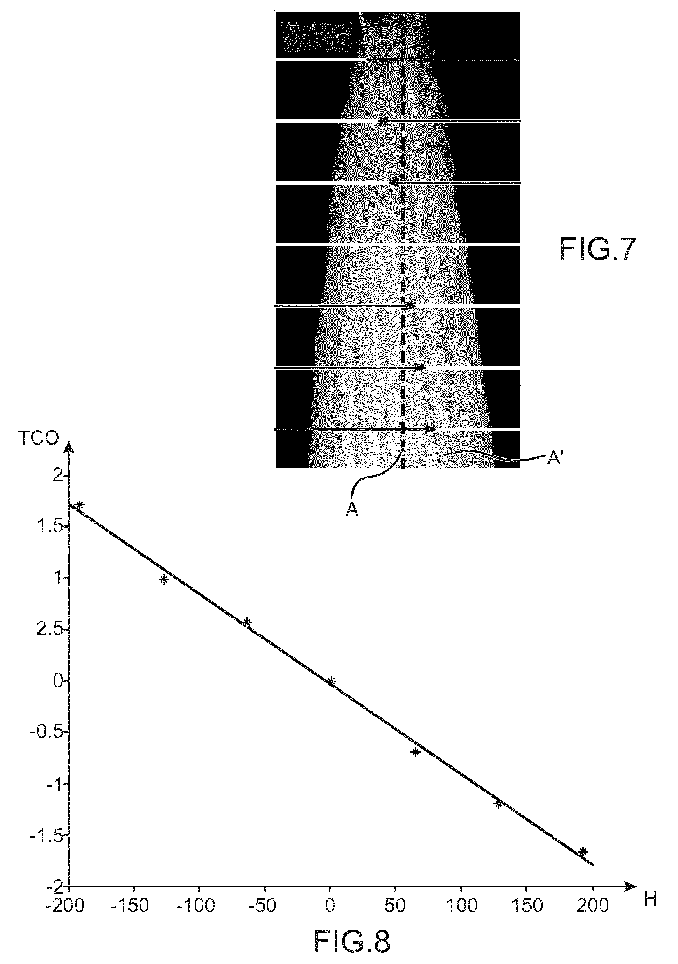

Sur la figure 8, on peut voir une représentation graphique des décalages totaux en pixels à sept hauteurs H (en pixels) différentes. Dans cette représentation, la hauteur nulle est prise au centre de la projection. Sur la figure 7, on peut voir reportés sur une projection les TCO déterminées à chaque hauteur et l'axe de rotation réel obtenue par interpolation linéaire. En variante, le ou les TCO trop éloignée(s) de la droite d'approximation linéaire peut ou peuvent ne pas être prise(s) en compte.

Le décalage entre l'axe de rotation supposé et l'axe de rotation réel est ensuite pris en compte pour corriger la reconstruction 3D.

On peut par exemple:
- soit translater et/ou tourner chacune des projections pour que la verticale au centre des nouvelles projections se situe sur l'axe déterminé par l'interpolation. En pratique il suffit de translater toutes les projections de -*x*0, puis de les tourner de l'angle -α en utilisant le milieu des images comme centre de rotation. On peut ensuite reconstruire l'objet en 3D avec des algorithmes de reconstruction classiques qui considèrent que l'axe de rotation se situé au centre des projections et est orienté verticalement.
- soit prendre en compte l'axe de rotation réel directement dans les algorithmes de reconstruction.

Avantageusement, on peut envisager de réduire le nombre de pixels de chaque groupe pour accélérer la vitesse de traitement. Par exemple, en divisant par deux le nombre de pixels par ligne et par deux le nombre de lignes, le nombre de pixels est divisé par quatre dans un groupe de données. Le facteur de diminution du nombre de pixel est pris en compte dans la détermination des translations communes optimales avant de déterminer l'angle d'inclinaison.

La diminution de la taille des sous-groupes de projections peut être obtenue par des méthodes d'interpolations classiques (linéaire, cubique...) et a pour avantage de diminuer le bruit dans les sous-groupes de projections.

Le procédé de détermination de l'axe de rotation réel selon l'invention permet avantageusement de réaliser un logiciel de reconstruction de tomographie entièrement automatisé.

Le procédé selon l'invention peut s'appliquer à la tomographie électronique et la tomographie rayons X, que ce soit en sciences de la matière ou en science du vivant. Le procédé peut également être utilisé dans le domaine médical.

## Revendications

1. Procédé de détermination d'un axe de rotation d'un objet lors d'une acquisition de projections obtenue par un système de caractérisation par tomographie, comportant les étapes, à partir desdites projections:
a) choix d'un axe de rotation supposé sur les projections,
b) sélection d'une première zone sur les projections le long de l'axe de rotation supposé,
c) reconstruction d'une structure de l'objet à partir des données de la zone sélectionnée à partir de tout ou parties des projections en considérant l'axe de rotation supposé,
d) réalisation de reprojections de la reconstruction,
e) détermination de décalages entre les projections et les reprojections,
f) détermination d'un décalage commun à partir des décalages déterminés à l'étape e),
g) application du décalage commun à la zone sélectionnée sur tout ou partie des projections,
h) répétition des étapes c) à g), l'étape de reconstruction c) étant faite à partir des projections obtenues à l'étape d), tant qu'un critère d'arrêt n'est pas atteint,
i) détermination d'un décalage total à partir du ou des décalage(s) commun(s) déterminés à l'étape f) ou aux étapes f),
j) répétition des étapes a) à i) pour n autres zones distinctes de la première zone, n étant supérieur ou égal à 1,
k) détermination de l'axe de rotation à partir des décalages totaux déterminés pour les n + 1 zones.

2. Procédé de détermination d'un axe de rotation selon la revendication 1, dans lequel les étapes c) et d) se font avec le même projecteur.

3. Procédé de détermination d'un axe de rotation selon la revendication 1 ou 2, dans lequel n est supérieur ou égal à 2 et est avantageusement égal à 6.

4. Procédé de détermination d'un axe de rotation selon l'une des revendications 1 à 3, dans lequel l'étape c) est réalisée par une méthode de reconstruction itérative simultanée (SIRT) comprenant avantageusement 100 itérations avec une contrainte de positivité.

5. Procédé de détermination selon l'une des revendications 1 à 4, dans lequel l'étape e) se fait par corrélations-croisées.

6. Procédé de détermination d'un axe de rotation selon l'une des revendications 1 à 5, dans lequel l'étape k) se fait par extrapolation linéaire à partir des décalages totaux.

7. Procédé selon l'une des revendications 1 à 6, dans lequel la détermination d'un décalage commun comporte l'étape de détermination d'un décalage moyen à partir des décalages déterminés à l'étape e), le décalage commun étant égal à un coefficient λ multiplié par le décalage moyen, λ étant strictement supérieur à 0.

8. Procédé de détermination d'un axe de rotation selon la revendication 7, dans lequel la valeur du coefficient λ diminue aux cours des itérations, le coefficient λ étant avantageusement initialement égal à 10.

9. Procédé de détermination d'un axe de rotation selon l'une des revendications 1 à 8, dans lequel le critère d'arrêt est soit:
- uniquement un nombre d'itérations des étapes c) à g),
- uniquement une valeur du dernier décalage commun inférieure à une valeur donnée,
- celui qui est atteint le premier parmi un nombre d'itérations des étapes c) à g) ou une valeur du dernier décalage commun inférieure à une valeur donnée,

10. Procédé de détermination d'un axe de rotation selon l'une des revendications 1 à 9, comportant l'étape d'alignement des projections, avant l'étape de reconstruction, par exemple par corrélations-croisées.

11. Procédé de détermination d'un axe de rotation selon l'une des revendications 1 à 10, dans lequel les zones sélectionnées comportent une ou plusieurs lignes de pixels.

12. Procédé de caractérisation par tomographie comportant les étapes :
A) Acquisition de plusieurs projections,
B) détermination de l'axe de rotation réel de l'objet en mettant en oeuvre le procédé selon l'une des revendications 1 à 11,
C) Prise en compte de l'axe de rotation réel pour effectuer la reconstruction de la structure de l'objet au moyen d'un algorithme de reconstruction.

13. Procédé de caractérisation par tomographie selon la revendication 12, dans lequel l'étape C) comporte préalablement à la reconstruction, la correction des projections avec l'axe de rotation réel.

14. Procédé de caractérisation par tomographie selon la revendication 12, dans lequel l'étape C) comporte préalablement à la reconstruction, l'intégration des corrections dans l'algorithme de reconstruction

15. Procédé de caractérisation par tomographie selon l'une des revendications 12 à 14, dans lequel l'étape A) se fait par tomographie électronique.

16. Procédé de caractérisation par tomographie selon l'une des revendications 12 à 14, dans lequel l'étape A) se fait par tomographie à rayons X.
